# EUROPÄISCHE PATENTSCHRIFT

(11) **EP 1 056 994 B1**
(45) Veröffentlichungstag und Bekanntmachung des Hinweises auf die Patenterteilung: **01.08.2001**
(21) Anmeldenummer: 99911584.3
(22) Anmeldetag: 05.02.1999
(51) Int. Cl.: G01K 13/08

(54) **THERMOELEMENT UND MESSVORRICHTUNG ZUR BERÜHRUNGSLOSEN TEMPERATURMESSUNG AN BEWEGTEN MASCHINENTEILEN**
THERMOELEMENT AND DEVICE FOR CONTACTLESS MEASURING TEMPERATURE ON MOVING MACHINE PARTS
THERMOELEMENT ET DISPOSITIF DE MESURE POUR MESURER SANS CONTACT UNE TEMPERATURE SUR DES PIECES DE MACHINES EN MOUVEMENT

(30) Priorität: 05.02.1998 DE 29801910 U; 19.11.1998 DE 29820623 U
(43) Veröffentlichungstag der Anmeldung: 06.12.2000
(73) Patentinhaber: Dr. E. Horn GmbH Messgerätefabrik, 71101 Schönaich (DE)
(72) Erfinder: BEHRENS, Hans-Peter, D-71093 Weil im Schönbuch (DE)
(74) Vertreter: KOHLER SCHMID + PARTNER
(86) Internationale Anmeldenummer: DE9900322
(87) Internationale Veröffentlichungsnummer: WO9940401

(56) Entgegenhaltungen:
- EP-A- 0 756 160
- DE-A- 2 136 809
- FR-A- 2 662 799

## Beschreibung

Die vorliegende Erfindung betrifft ein Thermoelement mit zwei beidenends aneinander angrenzenden Thermoschenkeln, die einen geschlossenen elektrischen Stromkreis bilden, und mit einem thermisch kontaktierbaren Umfangsabschnitt sowie eine entsprechende Meßvorrichtung.

Ein solches Thermoelement und eine entsprechende Meßvorrichtung sind aus der DE-A-21 36 809 bekanntgeworden.

Hat in einem aus verschiedenen Metallen zusammengesetzten Leiterkreis auch nur eine Berührstelle eine andere Temperatur als die übrigen Teile des Stromkreises, so entsteht in ihm eine von der Temperaturdifferenz abhängige elektromotorische Kraft (EMK), die einen elektrischen Strom hervorruft.

Bekannte Thermoelemente bestehen daher aus zwei Leitern aus verschiedenen Werkstoffen (einem Thermopaar), die an dem einen Ende zu einer Hauptlötstelle vereinigt sind, am anderen entweder unmittelbar zu einem vom Thermoelement getrennten Meßgerät führen oder zu einer Nebenlötstelle ausgebildet sind, die auf einer konstanten Temperatur, meist 0 °C, gehalten wird. Auch im letzteren Fall wird die zwischen Haupt- und Nebenlötstelle auftretende Thermospannung mit Hilfe eines zwischengeschalteten Meßgeräts gemessen. Die einzelnen Leiter eines Thermopaars werden als Thermoschenkel bezeichnet und bestehen meist aus runden Drähten von 0,1-3 mm Dikke. Am häufigsten werden als Thermopaare Fe-Konstantan, NiCr-Ni und PtRh-Pt verwendet, wobei Konstantan eine aus etwa 53% Cu, 45% Ni, etwas Mn, Al und Si zusammengesetzte Legierung ist.

Um mit diesen bekannten Thermoelementen die Temperatur eines sich insbesondere periodisch bewegenden Maschinenteils von außen abfragen zu können, wird ein solches Thermoelement an dem Maschinenteil angebracht und die zwischen seinen beiden Thermoschenkeln wirkende Thermospannung nach außen geleitet. Damit die dazu erforderlichen elektrischen Leitungen die Bewegung des Maschinenteils nicht zu sehr einschränken, sind oft, insbesondere bei rotierenden Maschinenteilen, komplizierte und aufwendige elektrische Verbindungen erforderlich.

Aus der eingangs genannten DE-A-21 36 809 ist ein Thermoelement mit einer heißen Lötstelle, die in gutem Wärmekontakt mit der Lagerschale eines Pleuellagers steht, und mit einer kalten Lötstelle, die aus einer Bohrung der Pleuelstange herausgeführt ist, bekannt. Bei diesem Thermoelement ändert sich die Temperatur der kalten Lötstelle nicht. Ein Thermostrom tritt auf, wenn sich die Temperatur der heißen Lötstelle ändert. Allerdings ist bei diesem Thermoelement nur ein punktueller Kontakt mit dem temperaturmäßig zu erfassenden Maschinenteil möglich.

Aus der FR-A-2 662 799 ist ferner eine Meßvorrichtung bekannt, um die an einer Reibfläche eines sich bewegenden Maschinenteils herrschende Temperatur zu messen. Als Temperaturfühler ist ein Kupferleiter vorgesehen, der an seinem einen Ende das Maschinenteil elektrisch kontaktiert und so ein erstes Thermoelement bildet. Das andere Ende des Kupferleiters ist mit einem Eisenleiter verbunden, um ein zweites ein elektrisch geschlossener Stromkreis unter Einbeziehung des Maschinenteils gebildet ist. Diese Einbeziehung des temperaturmäßig zu messenden Teils in den Thermostromkreis erfordert mindestens zwei elektrische Kontaktstellen mit diesem Teil, nämlich sowohl mit dem Kupferleiter als auch mit dem Eisenleiter.

Es ist deshalb die Aufgabe der vorliegenden Erfindung, ein Thermoelement der eingangs genannten Art derart weiterzubilden, daß zwischen dem Thermoelement und dem Maschinenteil auch eine möglichst großflächige Wärmeübergangsfläche ausgebildet werden kann, sowie eine Meßvorrichtung dafür bereitzustellen.

Diese Aufgabe wird bei einem Thermoelement der eingangs genannten Art dadurch gelöst, daß der kontaktierbare Umfangsabschnitt nur an einem Thermoschenkel vorgesehen ist, wobei die Wärmeleitwiderstände, welche jeweils insgesamt zwischen dem Umfangsabschnitt und den beiden durch die beiden Thermoschenkel gebildeten Grenzflächen wirken, unterschiedlich sind.

Wenn über den kontaktierten Umfangsabschnitt ein Wärmezufluß oder -abfluß auf das bzw. von dem erfindungsgemäßen Thermoelement stattfindet, erwärmen sich aufgrund der verschiedenen Wärmeleitwiderstände die beiden Grenzflächen (Lötstellen) unterschiedlich schnell bzw. kühlen unterschiedlich schnell ab. Dies führt zu unterschiedlich hohen, jeweils über eine Grenzfläche fließenden Strömen und damit zu einem im Thermoelement insgesamt fließenden Ringstrom, dessen Magnetfeld von außen berührungslos nachweisbar ist. Wenn sich beide Grenzflächen auf gleicher Temperatur befinden, fließt kein Strom im Thermoelement. Je größer die Temperaturdifferenz zwischen den beiden Grenzflächen, desto größer sind der Ringstrom und sein Magnetfeld, so daß die Stärke des Magnetfelds ein Maß für die Temperaturdifferenz zwischen beiden Grenzflächen darstellt.

Bei einer besonders bevorzugten Ausführungsform sind die thermisch wirksamen Abstände zwischen dem kontaktierbaren Umfangsabschnitt und den beiden Grenzflächen jeweils unterschiedlich lang. Mit dieser Ausführungsform kann insbesondere auch dann, wenn die Werkstoffe beider Thermoschenkel eine etwa gleich große Wärmeleitfähigkeit aufweisen, dennoch eine unterschiedlich schnelle Erwärmung bzw. Abkühlung der beiden Grenzflächen sichergestellt werden.

Eine deutlich verzögerte Erwärmung und Abkühlung der beiden Grenzflächen kann bei einer bevorzugten Weiterbildung dieser Ausführungsform auch bei etwa gleich großen thermisch wirksamen Abständen dann erreicht werden, wenn die Querschnittsfläche des den kontaktierbaren Umfangsabschnitt ausbildenden Thermoschenkels zu beiden Seiten des kontaktierbaren Umfangsabschnitts unterschiedlich groß ist. Eine nur auf einer der beiden Seiten des kontaktierbaren Umfangsabschnitts erfolgende Querschnittsverengung führt auf dieser Seite zu einem geringeren Wärmeleitwiderstand als auf seiner anderen Seite, d.h. zu unterschiedlichen Wärmeleitwiderständen auf beiden Seiten.

Eine weitere bevorzugte Ausführungsform der Erfindung sieht vor, daß die Wärmeleitfähigkeit der beiden Thermoschenkel unterschiedlich ist. Während insbesondere der Thermoschenkel, der den kontaktierbaren Umfangsabschnitt ausbildet, aus den oben genannten Gründen möglichst aus einem Werkstoff mit hoher Wärmeleitfähigkeit gebildet sein sollte, führt die geringe Wärmeleitfähigkeit des anderen Thermoschenkels dazu, daß sich innerhalb dieses anderen Thermoschenkels Wärme von der wärmeren Grenzfläche zur kälteren Grenzfläche nur langsam ausbreiten kann. Dadurch verzögert sich nach einer Temperaturänderung das Einstellen einer einheitlichen Temperatur zwischen beiden Grenzflächen, so daß sich eine aufgetretene Temperaturänderung länger nachweisen läßt.

Um eine Erwärmung am kontaktierbaren Umfangsabschnitt möglichst schnell und mit geringen thermischen Verlusten an eine oder an beide Grenzflächen weiterzuleiten, ist in vorteilhaften Ausführungsformen ein Thermoschenkel, insbesondere der zumindest größtenteils den kontaktierbaren Umfangsabschnitt bildende Thermoschenkel, aus Kupfer gebildet. Kupfer hat zudem den Vorteil der hohen elektrischen Leitfähigkeit, so daß bei Temperaturdifferenzen ein relativ hoher Strom im Thermoelement fließen kann.

Bevorzugt ist ein Thermoschenkel, insbesondere der den kontaktierbaren Umfangsabschnitt höchstens kleinstenteils ausbildende Thermoschenkel, aus Konstantan gebildet. Konstantan ist eine wenig temperaturempfindliche Widerstandslegierung, die bei bekannten Thermopaaren in Verbindung mit einem Fe- oder Ni-Thermoschenkel Verwendung findet. Wegen seiner großen Thermo-EMK gegen Kupfer (-4- mV/100 °C) ist für das erfindungsgemäße Thermoelement die Kombination Kupfer-Konstantan, insbesondere auch aus Kostengründen, besonders geeignet.

Aber auch andere Kombinationen von Werkstoffen, wie sie beispielsweise bei an sich bekannten Thermopaaren bekannt sind, können beim erfindungsgemäßen Thermoelement eingesetzt werden.

Die Erfindung betrifft auch eine Vorrichtung zur Messung einer Information über die Temperatur eines von zwei relativ aneinander vorbeibewegter Teile und zur Weitergabe dieser Temperaturinformation an das andere Teil.

Die oben genannte Aufgabe wird bei einer solchen Vorrichtung gelöst durch ein an dem einen Teil vorgesehenes, über seinen kontaktierbaren Umfangsabschnitt in thermischem Kontakt mit diesem Teil stehendes Thermoelement, wie es oben beschrieben ist, und durch eine am zweiten Teil im Bereich der relativen Bewegungsbahn des ersten Teils vorgesehene Magnetfeld-Meßeinrichtung.

Eine Temperaturänderung in dem einen Teil wird an das Thermoelement über dessen Umfangsabschnitt und damit zu dessen Grenzflächen weitergeleitet. Bei jedem Vorbeibewegen des einen Teils an der Magnetfeld-Meßeinrichtung wird, sofern an den beiden Grenzflächen unterschiedliche Temperaturen herrschen, in der Magnetfeld-Meßeinrichtung durch das das Thermoelement umgebende Magnetfeld ein Signal erzeugt, dessen Größe ein Maß für die im Thermoelement herrschende Differenztemperatur darstellt.

Bei bevorzugten Ausführungsformen kann das Thermoelement, zumindest teilweise, in Richtung auf die Magnetfeld-Meßeinrichtung vorstehen, so daß insbesondere der störende Einfluß von Magnetfeldern, wie sie z.B. durch den im Thermoelement auch in entgegengesetzter Richtung fließenden Ringstrom erzeugt werden, klein gehalten werden können.

Beim Vorbeibewegen des Thermoelements an der Magnetfeld-Meßeinrichtung wird in dieser ein Strom induziert. Um dabei eine möglichst hohe Meßempfindlichkeit erreichen zu können, ist die Magnetfeld-Meßeinrichtung bei ganz besonders bevorzugten Ausführungsformen als eine Hallsonde ausgebildet.

Eine weitere Ausführungsform der erfindungsgemäßen Meßvorrichtung sieht vor, das Thermoelement an einem bewegten Lager, insbesondere an einem Pleuel- oder Kurbelwellenlager eines Motors, vorzusehen, um Informationen über Lagertemperaturänderungen berührungslos an die Magnetfeld-Meßeinrichtung weiterzugeben.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine weitere Meßvorrichtung mit einem Thermoelement und einer Magnetfeld-Meßeinrichtung; und
- Fig. 2: ein Anwendungsbeispiel-für die in Fig. 1 gezeigte Meßvorrichtung zur Überwachung der Temperatur eines Pleuellagers.

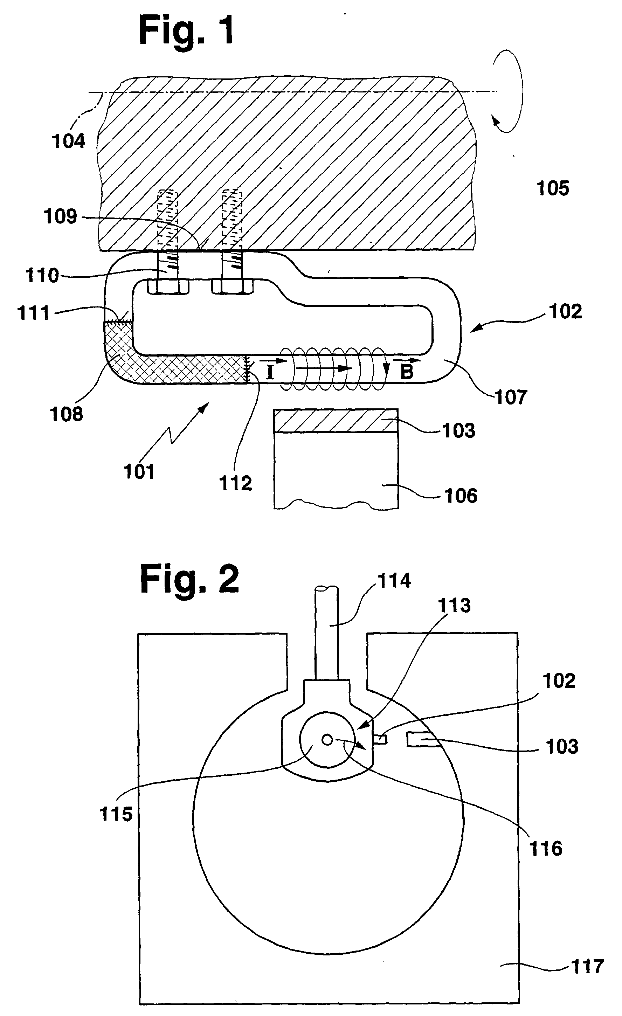

Die in **Fig. 1** mit **101** bezeichnete Meßvorrichtung umfaßt ein Thermoelement **102** und eine Magnetfeld-Meßeinrichtung in Form einer Hallsonde **103**. Das Thermoelement **102** ist, radial nach außen vorstehend, an einem um eine Drehachse **104** rotierenden Maschinenteil **105** angebracht, während die Hallsonde **103** ortsfest an einem zweiten Maschinenteil **106** nahe der Bewegungsbahn des mitrotierenden Thermoelements 102 vorgesehen ist.

Das ringförmig ausgebildete Thermoelement 102 umfaßt zwei Thermoschenkel **107, 108** aus Kupfer bzw. aus Konstantan, die jeweils beidenends, einen in sich geschlossenen elektrischen Stromkreis bildend, aneinander angrenzen. Im gezeigten Ausführungsbeispiel ist die Querschnittsfläche der beiden Thermoschenkel 107, 108 gleich und beträgt ca. 10 mm².

Der Thermoschenkel 107 aus Kupfer weist einen thermisch kontaktierbaren Umfangsabschnitt 109 auf, der in thermischem Kontakt mit dem ersten Maschinenteil 105 steht. Im Ausführungsbeispiel dient dieser Umfangsabschnitt **109** auch der Befestigung am ersten Maschinenteil 105 mit Hilfe von Befestigungsmitteln (Schrauben **110**).

Die durch die aneinander grenzenden Thermoschenkel 107, 108 gebildeten Grenzflächen **111**, **112** sind in unterschiedlichem thermisch wirksamen Abstand vom kontaktierbaren Umfangsabschnitt 109 vorgesehen. Wenn sich nun die Temperatur des rotierenden Maschinenteils 105 erhöht, so erwärmt sich mit dem Umfangsabschnitt 109 auch der Thermoschenkel 107. Dessen Temperaturerhöhung wird an die dem Umfangsabschnitt 109 nähere Grenzfläche 111 schneller weitergeleitet als an die andere Grenzfläche 112. Durch diese an den beiden Grenzflächen 111, 112 auftretende Temperaturdifferenz durchfließt das Thermoelement 102 insgesamt ein Ringstrom I, der von einem Magnetfeld **B** umgeben ist. Jedesmal wenn sich das Thermoelement 102 nahe an der Hallsonde 103 vorbeibewegt, wird darin durch das das Thermoelement 102 umgebende Magnetfeld B ein Signal erzeugt, dessen Größe ein Maß für die im Thermoelement 102 herrschende Differenztemperatur und für die am ersten Maschinenteil 105 aufgetretene Temperaturänderung ist.

Bei dem Ausführungsbeispiel der **Fig. 2** dient die beschriebene Meßvorrichtung der Überwachung der Temperatur des Lagers **113** einer an einer Pleuelstange **114** gelagerten Kurbelwelle **115** in einem Motor. Dazu ist das Thermoelement 102 an der sich in Pfeilrichtung **116** drehenden Pleuelstange 114 im Bereich des Lagers 113 und die Hallsonde 103 ortsfest innen am Motorgehäuse **117** nahe der Bewegungsbahn des Thermoelements 102 vorgesehen. Eine Temperaturerhöhung am Lager 113 führt, wie oben beschrieben, zu einem das Thermoelement 102 umgebenden Magnetfeld, das durch die Hallsonde 103 nachgewiesen werden kann und dessen Größe Rückschlüsse über Temperaturänderungen am Lager 113 ermöglicht.

Die beschriebenen Thermoelemente bzw. die beschriebene Meßvorrichtung eignen sich insbesondere zum Überwachen von Lagerstellen fester oder fliegender Lager.

## Patentansprüche

1. Thermoelement (102) mit zwei beidenends. aneinander angrenzenden Thermoschenkeln (107, 108), die einen geschlossenen elektrischen Stromkreis bilden, und mit einem thermisch kontaktierbaren Umfangsabschnitt (109),
dadurch gekennzeichnet,
daß der kontaktierbare Umfangsabschnitt (109) nur an einem Thermoschenkel (107) vorgesehen ist, wobei die Wärmeleitwiderstände, welche jeweils insgesamt zwischen dem Umfangsabschnitt (109) und den beiden durch die beiden Thermoschenkel (107, 103) gebildeten Grenzflächen (111, 112) wirken, unterschiedlich sind.

2. Thermoelement nach Anspruch 1, dadurch gekennzeichnet, daß die thermisch wirksamen Abstände zwischen dem kontaktierbaren Umfangsabschnitt (109) und den beiden Grenzflächen (111, 112) jeweils unterschiedlich lang sind.

3. Thermoelement nach Anspruch 1 oder 2, dadurch gekennzeichnet, daß die Querschnittsfläche des den kontaktierbaren Umfangsabschnitt (109) ausbildenden Thermoschenkels (107) zu beiden Seiten des kontaktierbaren Umfangsabschnitts (109) unterschiedlich groß ist.

4. Thermoelement nach einem der Ansprüche 1 bis 3, dadurch gekennzeichnet, daß die Wärmeleitfähigkeit der beiden Thermoschenkel (107, 108) unterschiedlich ist.

5. Thermoelement nach einem der Ansprüche 1 bis 4, dadurch gekennzeichnet, daß ein Thermoschenkel (107; 108), insbesondere der zumindest größtenteils den kontaktierbaren Umfangsabschnitt (109) bildende Thermoschenkel (107), aus Kupfer gebildet ist.

6. Thermoelement nach einem der Ansprüche 1 bis 5, dadurch gekennzeichnet, daß ein Thermoschenkel (107; 108), insbesondere der den kontaktierbaren Umfangsabschnitt (109) höchstens kleinstenteila ausbildende Thermoschenkel (108), aus Konstantan gebildet ist.

7. Thermoelement nach einem der Ansprüche 1 bis 6, dadurch gekennzeichnet, daß die beiden Thermoschenkel (107, 108) aus den Werkstoffen von an sich bekannten Thermopaaren gebildet sind.

8. Vorrichtung (101) zur Messung einer Information über die Temperatur eines von zwei relativ aneinander vorbeibewegter Teile (105, 106) und zur Weitergabe dieser Temperaturinformation an das andere Teil, gekennzeichnet durch ein an dem einen Teil (105) vorgesehenes, über seinen kontaktierbaren Umfangsabschnitt (109) in thermischem Kontakt mit diesem Teil (105) stehendes Thermoelement (102) nach einem der Ansprüche 1 bis 7 und durch eine am zweiten Teil (106) im Bereich der relativen Bewegungsbahn des ersten Teils (105) vorgesehene Magnetfeld-Meßeinrichtung.

9. Meßvorrichtung nach Anspruch 8, dadurch gekennzeichnet, daß das Thermoelement (102) in Richtung auf die Magnetfald-Meßeinrichtung vorsteht.

10. Meßvorrichtung nach Anspruch 8 oder 9, dadurch gekennzeichnet, daß die Magnetfeld-Meßeinrichtung als eine Hallsonde (103) ausgebildet ist.

11. Meßvorrichtung nach einem der Ansprüche 8 bis 10, dadurch gekennzeichnet, daß das Thermoelement (102) an einem bewegten Lager (113), insbesondere einer Pleuelstange (114) oder einer Kurbelwelle (115) eines Motors, vorgesehen ist.

## Claims

1. A thermoelement (102) with, adjacent each other at both ends, two temperature-sensing arms (107, 108) which form a closed electric circuit, and with a thermally contactable peripheral portion (109), characterised in that the contactable peripheral portion (109) is only provided on one temperature sensing arm (107), whereby the heat-conductive resistors which respectively and jointly act between the peripheral portion (109) and the two interfaces (111, 112) formed by the two temperature sensing arms (107, 108), are different.

2. A thermoelement according to claim 1, characterised in that the thermally effective gaps between the contactable peripheral portion (109) and the two interfaces (111, 112) are respectively of different lengths.

3. A thermoelement according to claim 1 or 2, characterised in that the cross-sectional area of the temperature sensing arm (107) which constitutes the contactable peripheral portion (109) is of a different size on both sides of the contactable peripheral portion (109).

4. A thermoelement according to one of claims 1 to 3, characterised in that the heat conductivity of the two temperature sensing arms (107, 108) is different.

5. A thermoelement according to one of claims 1 to 4, characterised in that one temperature sensing arm (107, 108), particularly the temperature sensing arm (107) which at least for the most part constitutes the contactable peripheral portion (109), is formed from copper.

6. A thermoelement according to one of claims 1 to 5, characterised in that one temperature sensing arm (107, 108), particularly the temperature sensing arm (108) which constitutes not more than the least part of the contactable peripheral portion (109), consists of constantan.

7. A thermoelement according to one of claims 1 to 6, characterised in that the two temperature sensing arms (107, 108) are formed from materials from per se known thermocouples.

8. A device (101) for measuring data via the temperature of one of two parts (105, 106) which pass in relation to each other and for passing on this temperature data to the other part, characterised by a thermoelement (102) according to one of claims 1 to 7 and which is provided on one part (105) in which it is in thermal contact via its contactable peripheral portion (109), and by a magnetic field measuring means provided on the second part (106) in the region of the path of relative movement of the first part (105).

9. A measuring device according to claim 8, characterised in that the thermoelement (102) projects in the direction of the magnetic field measuring means.

10. A measuring device according to claim 8 or 9, characterised in that the magnetic field measuring means is constructed as a Hall's probe (103).

11. A measuring device according to one of claims 8 to 10, characterised in that the thermoelement (102) is provided on a moving bearing (113), particularly of a connecting rod (114) or of a crankshaft (115) of an engine.

## Revendications

1. Thermocouple (102) comportant deux branches thermiques (107, 108) qui sont contiguës à leurs deux extrémités et forment un circuit électrique fermé, et une section périphérique (109), avec laquelle un contact thermique peut être établi,
caractérisé en ce
que la section périphérique (109), avec laquelle un contact peut être établi, est prévue uniquement sur une branche thermique (107), les inerties thermiques, qui agissent respectivement globalement entre la partie périphérique (109) et les deux surfaces limites (111, 112) formées par les deux branches thermiques (107, 108) étant différentes.

2. Thermocouple selon la revendication 1,
caractérisé en ce que les distances actives du point de vue thermique, qui sont présentes entre la section périphérique (109), avec laquelle un contact peut être établi, et les deux surfaces limites (111, 112), sont respectivement différentes.

3. Thermocouple selon la revendication 1 ou 2,
caractérisé en ce que la surface en coupe transversale de la branche thermique (107), qui constitue la section périphérique (109), avec laquelle un contact peut être établi, est différentes des deux côtés de la section périphérique (109), avec laquelle un contact peut être établi.

4. Thermocouple selon l'une des revendications 1 à 3, caractérisé en ce que les inerties thermiques des deux branches thermiques (107, 108) sont différentes.

5. Thermocouple selon l'une des revendications 1 à 4, caractérisé en ce qu'une branche thermique (107; 108), notamment la branche thermique (107), qui forme au moins la majeure partie la section périphérique (109), avec laquelle un contact peut être établi, est réalisée en cuivre.

6. Thermocouple selon l'une des revendications 1 à 5, caractérisé en ce qu'une branche thermique (107; 108), notamment la branche (108), qui forme au maximum la partie la plus petite de la section périphérique (109), avec laquelle un contact peut être établi, est réalisée en constantan.

7. Thermocouple selon l'une des revendications 1 à 6, caractérisé en ce que les deux branches thermiques (107, 108) sont réalisées avec les matériaux d'un thermocouple connu en soi.

8. Dispositif (101) pour mesurer une information concernant la température de l'une de deux parties (105, 106) se déplaçant l'une devant l'autre et transmettre cette information de température à l'autre partie, caractérisé par un thermocouple (102), qui est prévu sur une partie (105) et est placé en contact thermique avec cette partie (105) par l'intermédiaire d'une section périphérique (109), avec laquelle un contact thermique peut être établi, selon l'une des revendications 1 à 7 et par un dispositif de mesure de champ magnétique prévu sur la seconde partie (106) dans la zone de la voie de déplacement relative de la première partie (105).

9. Dispositif de mesure selon la revendication 8, caractérisé en ce que le thermocouple (102) fait saillie en direction du dispositif de mesure du champ magnétique.

10. Dispositif de mesure selon la revendication 8 ou 9, caractérisé en ce que le dispositif de mesure du champ magnétique est agencé sous la forme d'une sonde à effet Hall (103).

11. Dispositif de mesure selon l'une des revendications 8 à 10, caractérisé en ce que le thermocouple (102) est prévu sur un palier mobile (113), notamment d'une bielle (114) ou d'un vilebrequin (115) d'un moteur.
